# EUROPEAN PATENT APPLICATION

(11) **EP 4 243 479 A1**
(43) Date of publication of application: **13.09.2023**
(21) Application number: 21899801.1
(22) Date of filing: 03.11.2021
(51) Int. Cl.: H04W 24/02

(54) **DATA TRANSMISSION METHOD, USER EQUIPMENT, AND STORAGE MEDIUM**

(30) Priority: 04.12.2020 CN 202011406990
(71) Applicant: ZTE Corporation, Shenzhen, Guangdong 518057 (CN)
(72) Inventor: YANG, Haicheng, Shenzhen, Guangdong 518057 (CN); GUO, Hailin, Shenzhen, Guangdong 518057 (CN)
(74) Representative: Savi, Massimiliano
(86) International application number: PCT/CN2021/128412
(87) International publication number: WO 2022/116767

(57) **Abstract**

A data transmission method, a user equipment, and a storage medium. The data transmission method comprises: connecting a first network slice corresponding to a target application (201); confirming a second network slice from network slices other than the first network slice, and connecting the second network slice (202); and distributing data to be sent of the target application to the first network slice and the second network slice for transmission (203).

## Description

### CROSS-REFERENCE TO RELATED APPLICATION

The present application is filed on the basis of Chinese patent application No. 202011406990.0 filed December 4, 2020, and claims priority to the Chinese patent application, the entire contents of which are incorporated herein by reference.

### TECHNICAL FIELD

The present disclosure relates to the field of communication technologies, and in particular to a data transmission method, a user equipment, and a storage medium.

### BACKGROUND

At present, with the wide popularization and application of Internet technologies, the traffic volume of users' browsing and downloading network data rises sharply. Although the qualities of basic services such as network bandwidth and network hardware are constantly improving, the various rapidly-growing needs of users cannot be met, leading to problems such as network congestion and network delay and affecting user experience. Therefore, how to increase the data transmission rate has become an urgent problem to be solved in the current Internet era.

### SUMMARY

The following is a summary of the subject matter set forth in this description. This summary is not intended to limit the scope of protection of the claims.

Embodiments of the present disclosure provide a data transmission method, a user equipment, and a storage medium.

In accordance with a first aspect of the present disclosure, an embodiment provides a data transmission method. The method includes: connecting to a first network slice corresponding to a target application; determining a second network slice from network slices other than the first network slice and connecting to the second network slice; and distributing data to be sent by the target application to the first network slice and the second network slice for transmission.

In accordance with a second aspect of the present disclosure, an embodiment provides a user equipment. The user equipment includes: at least one processor; and a memory communicably connected to the at least one processor, where the memory stores an instruction executable by the at least one processor which, when executed by the at least one processor, causes the at least one processor to implement the data transmission method of the first aspect.

In accordance with a third aspect of the present disclosure, an embodiment provides a computer-readable storage medium storing a computer-executable instruction which, when executed by a processor, causes the processor to implement the data transmission method of the first aspect.

Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, and do not constitute a limitation to the technical schemes of the present disclosure.
FIG. 1 is a schematic architectural diagram of a user equipment according to an embodiment of the present disclosure;
FIG. 2 is a flowchart of a data transmission method according to an embodiment of the present disclosure;
FIG. 3 is a detailed flowchart of connecting to a first network slice corresponding to a target application according to an embodiment of the present disclosure;
FIG. 4 is a detailed flowchart of determining a second network slice from network slices other than the first network slice and connecting to the second network slice according to an embodiment of the present disclosure;
FIG. 5 is a detailed flowchart of distributing data to be sent by the target application to the first network slice and the second network slice for transmission according to an embodiment of the present disclosure;
FIG. 6 is a flowchart of an example of a data transmission method according to an embodiment of the present disclosure;
FIG. 7 is a flowchart of another example of a data transmission method according to an embodiment of the present disclosure; and
FIG. 8 is a schematic structural diagram of a user equipment according to an embodiment of the present disclosure.

### DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It should be understood that in the description of the embodiments of the present disclosure, the term "a plurality of" (or multiple) means at least two, the term such as "greater than", "less than", "exceed" or variants thereof prior to a number or series of numbers is understood to be exclusive of the number(s). The term "above", "below", "within" and the like prior to a number or series of numbers is understood to be inclusive of the number(s). If used herein, the terms such as "first" and "second" and the like are merely used for distinguishing technical features, and are not intended to indicate or imply relative importance, or implicitly point out the number of the indicated technical features, or implicitly point out a precedence order of the indicated technical features.

The concept of Network Slice (NS) is introduced into the fifth generation (5G) mobile communication systems to cope with the different network performance requirements of different communication services. A network slice is a logical network which can provide specific network functions and meet specific service requirements, and includes a set of network function modules and resources required for implementing specific functions or services.

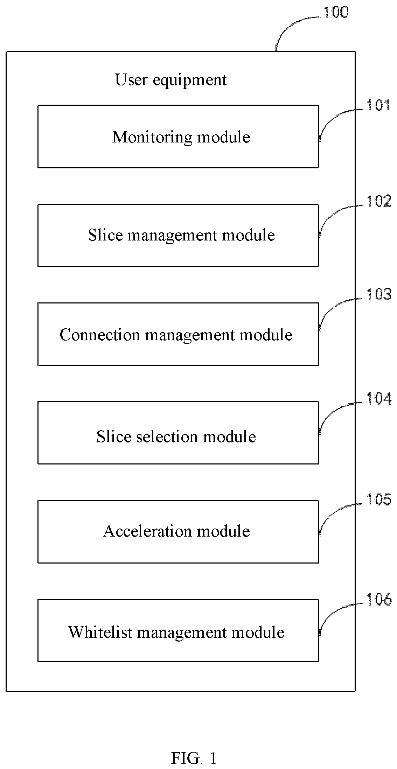

FIG. 1 is a schematic architectural diagram of a User Equipment (LTE) 100 according to an embodiment of the present disclosure. The UE 100 includes a monitoring module 101, a slice management module 102, a connection management module 103, a slice selection module 104, an acceleration module 105, and a whitelist management module 106.

The monitoring module 101 is configured for monitoring whether an application is started and requesting a corresponding network slice.

The slice management module 102 is configured for requesting a network slice from a network side, or maintaining or releasing a network slice.

The connection management module 103 is configured for configuring a network interface and a related route to connect to the corresponding network slice.

The slice selection module 104 is configured for selecting a network slice.

The acceleration module 105 is configured for distributing data to be sent to the corresponding network slice for transmission.

The whitelist management module 106 is configured for a user to set a list of target applications to be accelerated.

The UE 100 may be a wireless terminal device, for example, a mobile phone, a computer, a tablet computer, a Personal Digital Assistant (PDA), a Mobile Internet Device (MID), an Internet Protocol (IP) phone, a network printer, an e-book reader, a vehicle-mounted device, a wearable device, or an Internet of Things terminal device, such as a fire detection sensor, an intelligent water/electricity meter, an intelligent bicycle, an unmanned aerial vehicle, a factory monitoring device, etc.

The acceleration module 105 may be a VPN acceleration module.

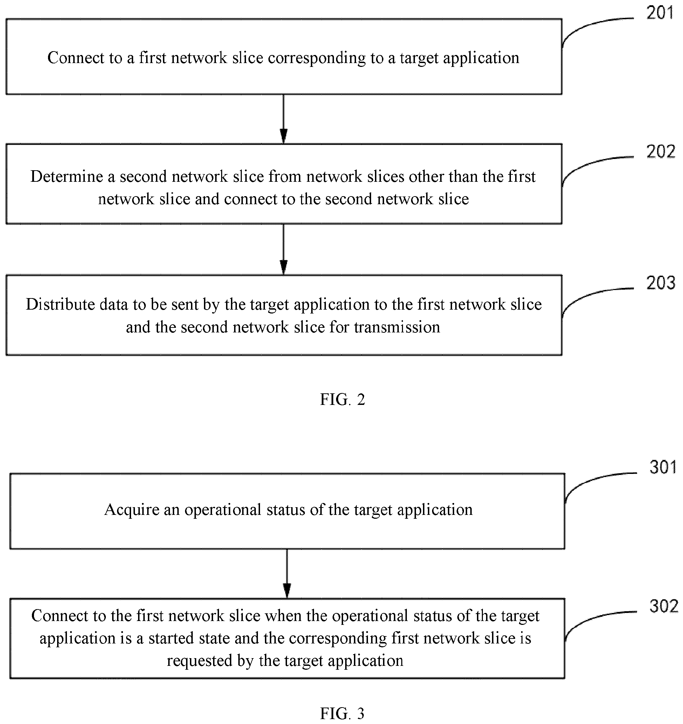

Referring to FIG. 2, an embodiment of the present disclosure provides a data transmission method, including, but not limited to, the following steps S201 to S202.

At S201, a first network slice corresponding to a target application is connected to.

In S201, the target application may be a video application, a game application, etc. It can be understood that the target application is a general term for a class of applications, and the number, type, and the like of the target applications are not limited.

The target application may carry a corresponding Data Network Name (DNN). Correspondingly, the first network slice corresponds to a first DNN. According to the first DNN carried by the target application, the slice management module 102 can request the corresponding first network slice according to the first DNN. For example, that the slice management module 102 requests the corresponding first network slice according to the first DNN may be: the slice management module 102 matches the first DNN against LTE routing selection policy (URSP) rule information for corresponding Single Network Slice Selection Assistance Information (S-NSSAI), and then initiates a Protocol Data Unit (PDU) session establishment request message carrying the S-NSSAI to the network side. The network side replies with a PDU session establishment accept message. As such, a PDU session establishment process is completed. After the requesting of the first network slice is completed, the connection management module 103 configures a corresponding network interface and a related route, to connect to the first network slice corresponding to the target application.

At S202, a second network slice is determined from network slices other than the first network slice, and the second network slice is connected to.

In S202, the second network slice is a network slice other than the first network slice, i.e., the second network slice and the first network slice are different network slices. The first network slice and the second network slice may be network slices in the same network or network slices in different networks. Take the UE 100 being a mobile phone as an example, the mobile phone may be a single-card single-active mobile phone, i.e., only one Subscriber Identity Module (SIM) card can be inserted into the mobile phone. In this case, both the first network slice and the second network slice are network slices in a network where the SIM card camps. Alternatively, the mobile phone may also be a dual-card dual-active mobile phone, i.e., two SIM cards can be inserted into the mobile phone. In this case, the first network slice and the second network slice may be network slices on a network where one of the SIM cards camps or may be network slices on networks where different SIM cards camp.

Similarly, after the second network slice is determined, the connection management module 103 configures a corresponding network interface and a related route, to connect to the second network slice.

At S203, data to be sent by the target application is distributed to the first network slice and the second network slice for transmission.

In S203, the data to be sent by the target application is distributed to the first network slice and the second network slice, i.e., the data to be sent by the target application is transmitted utilizing the first network slice and the second network slice at the same time. For example, the data packets to be sent by the target application may be divided into two data packets for transmission utilizing the first network slice and the second network slice, respectively. By simultaneously connecting to the first network slice and the second network slice which are different from each other, and during data transmission, distributing the data to the first network slice and the second network slice for transmission utilizing the first network slice and the second network slice at the same time, the problems of network congestion and network delay are alleviated, thereby improving the data transmission rate and achieving a network acceleration effect.

Referring to FIG. 3, as an example, connecting to the first network slice corresponding to the target application in S201 may include the following steps S301 to S302.

At S301, an operational status of the target application is acquired.

In S301, the operational status of the target application may be a started state, a background state, or a closed state. The started state may be starting the target application from the closed state or may be switching from the background state to foreground display. The background state may be that the target application is running in the background. The closed state may be that the target application is completely closed.

At S302, the first network slice is connected to when the operational status of the target application is the started state and the corresponding first network slice is requested by the target application.

In S302, the first network slice is connected to only when the operational status of the target application is the started state and the corresponding first network slice is requested. In other words, the operation of connecting to the first network slice is not always performed. In this way, the operation of connecting to the first network slice is performed only when necessary, thereby reducing the overall energy consumption of the UE 100 and improving the operating efficiency of the UE 100.

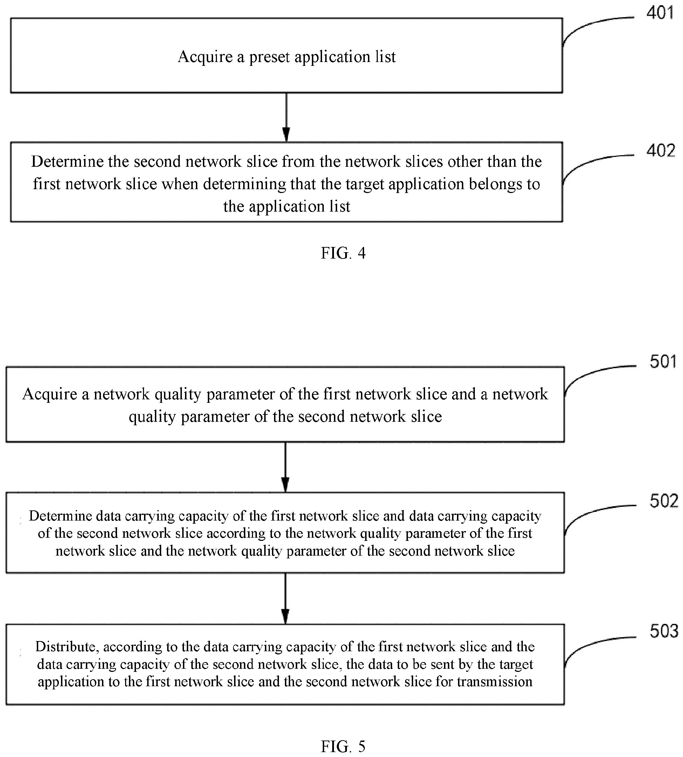

Referring to FIG. 4, as an example, determining the second network slice from the network slices other than the first network slice in S202 may include the following steps S401 to S402.

At S401, a preset application list is acquired.

In S401, the application list may be preset by the user, and may be stored locally or in a cloud. The application list may be stored in the form of a list. The application list may contain parameters such as an application name and an application identifier. It can be understood that, each target application may have a unique identifier parameter in the application list, so as to improve the accuracy of determining whether the target application belongs to the application list.

At S402, the second network slice is determined from the network slices other than the first network slice when determining that the target application belongs to the application list.

In S402, whether the target application belongs to the application list can be determined by matching the application name or the application identification. The second network slice is determined from the network slices other than the first network slice only when it is determined that the target application belongs to the application list. In other words, the operation of determining the second network slice from the network slices other than the first network slice is not always performed. In this way, the operation of determining the second network slice is performed only when necessary, thereby reducing the overall energy consumption of the UE 100 and improving the operating efficiency of the UE 100.

As an example, in S202 or S402 above, determining the second network slice from the network slices other than the first network slice may be implemented in any one of at least the following four manners.

In a first manner, a network slice other than the first network slice is selected from a public network slice pool currently established by the LTE 100 as the second network slice according to a network quality parameter.

The LTE 100 may have a plurality of target applications. Each of the target applications may request a corresponding network slice. The LTE 100 may establish the corresponding network slices to form a public network slice pool of the UE 100. Then, a network slice other than the first network slice may be selected from the public network slice pool as the second network slice according to the network quality parameter. In some examples, the network quality parameter may be one or more of a delay, a rate, and a packet loss rate of the network slice.

To improve the final data transmission rate, selecting a network slice other than the first network slice from the public network slice pool as the second network slice according to the network quality parameter may be selecting a network slice with an optimal network quality parameter as the second network slice. For example, a network slice with a minimum delay may be selected as the second network slice, or a network slice with a maximum rate may be selected as the second network slice, or a network slice with a maximum packet loss rate may be selected as the second network slice, or a network slice may be selected based on all the three network quality parameters.

For example, the public network slice pool of the UE 100 includes a network slice one, a network slice two, and a network slice three, all of which are different from the first network slice. The network slice one has a minimum delay, so the network slice one is selected as the second network slice.

In a second manner, a network slice other than the first network slice and matching the first DNN may be selected from the URSP rule information as the second network slice according to the first DNN corresponding to the first network slice.

The target application carries the first DNN corresponding to the first network slice when requesting the first network slice. In 5G networks, URSP rule information is introduced. To be specific, a 5G core network provides a terminal device with URSP rule information which the terminal device needs to follow through a policy control function (PCF), so that the terminal device routes data to be sent by an application according to one or more rules in the URSP rule information, including routing to an already established PDU session or triggering the establishment of a new PDU session. The URSP rule information contains a matching relation between DNNs and network slices, one DNN may match a plurality of different network slices, and different network slices are sorted based on their respective connection priorities. A network slice with a higher connection priority is preferentially connected to. Taking the first DNN as an example, the URSP rule information may contain a plurality of network slices matching the first DNN. The connection priority of the first network slice is the highest, so when the target application carries the first DNN, the first network slice is created preferentially. In a case where the second network slice needs to be determined, because the first DNN also corresponds to other network slices, a network slice may be selected from the other network slices matching the first DNN as the second network slice.

Selecting a network slice from the other network slices matching the first DNN as the second network slice may be selecting a network slice having a highest connection priority other than the first network slice as the second network slice. In other words, the network slices to which the LTE 100 finally connects are: the first network slice having the highest connection priority and matching the first DNN, and the second network slice having the second highest connection priority and matching the first DNN. In this way, the first network slice and the second network slice can better match the target application, thereby improving the final data transmission rate.

In a third manner, a network slice other than the first network slice may be acquired from an Allowed Network Slice Selection Assistance Information (ALLOWED_NSSAI) list provided by a network side as the second network slice.

The ALLOWED_NSSAI list contains, among NSSAI requested by the UE 100, S-NSSAI that the network side allows the UE 100 to connect to. The selection range of the second network slice can be expanded by acquiring a network slice other than the first network slice from the ALLOWED_NSSAI list provided by the network side as the second network slice.

In a fourth manner, the target application may carry the first DNN corresponding to the first network slice and a second DNN corresponding to the second network slice at the same time, so that the corresponding second network slice can be determined according to the second DNN. Because the second DNN is determined, this manner can improve the efficiency of determining the second network slice, reduce the overall energy consumption of the UE 100, and improve the operating efficiency of the UE 100.

Referring to FIG. 5, as an example, in S203, distributing data to be sent by the target application to the first network slice and the second network slice for transmission may include the following steps S501 to S503.

At S501, a network quality parameter of the first network slice and a network quality parameter of the second network slice are acquired.

In S501, the network quality parameter of the first network slice may be one or more of a delay, a rate, and a packet loss rate of the first network slice, and the network quality parameter of the second network slice may be one or more of a delay, a rate, and a packet loss rate of the second network slice.

At S502, data carrying capacity of the first network slice and data carrying capacity of the second network slice are determined according to the network quality parameter of the first network slice and the network quality parameter of the second network slice.

In S502, determining the data carrying capacity of the first network slice and the data carrying capacity of the second network slice according to the network quality parameter of the first network slice and the network quality parameter of the second network slice may be that the network slice with a better network quality parameter between the first network slice and the second network slice can carry a larger amount of data. Assuming that the network quality parameter is a delay, if the delay of the first network slice is lower than the delay of the second network slice, the data carrying capacity of the first network slice may be larger than the data carrying capacity of the second network slice.

At S503, the data to be sent by the target application is distributed to the first network slice and the second network slice for transmission according to the data carrying capacity of the first network slice and the data carrying capacity of the second network slice.

In S503, through the process of distributing, according to the data carrying capacity of the first network slice and the data carrying capacity of the second network slice (i.e., the network slice with a better network quality parameter has a greater data carrying capacity), the data to be sent by the target application to the first network slice and the second network slice for transmission, the rationality of data distribution can be improved, thereby the data transmission rate can be increased and a network acceleration effect can be achieved. For example, the network quality parameter is a delay, and the data to be sent by the target application includes a data packet one, a data packet two, and a data packet three. If the first network slice has a lower delay than the second network slice, distributing the data to be sent by the target application to the first network slice and the second network slice for transmission may be distributing the data packet one and the data packet two to the first network slice for transmission and distributing the data packet three to the second network slice for transmission.

In an embodiment, the data distributed to the second network slice may include the data distributed to the first network slice, to achieve a backup function and improve the stability of data transmission. For example, the data to be transmitted by the target application includes a data packet one and a data packet two, and according to a data distribution rule, the data packet one is distributed to the first network slice and the data packet two is distributed to the second network slice. In actual transmission, the data packet one is also distributed to the second network slice. To be specific, the first network slice transmits the data packet one, and the second network slice transmits the data packet one and the data packet two. In this way, both the data transmission rate and the stability of data transmission can be improved.

In the above embodiment, the number of the second network slices may be one or more. When the number of the second network slices is more than one, the number may be determined according to a network quality parameter of the target application or a preset number of network slices. The network quality parameter of the target application may be one or more of a delay, a rate, and a packet loss rate.

As an example, when the number of second network slices is determined according to the network quality parameter of the target application, the network quality parameter of the target application can be acquired after the data to be sent by the target application is distributed to the first network slice and the second network slice for transmission. If the network quality parameter of the target application does not reach a preset value, another second network slice is determined and connected to, and the data to be sent by the target application is distributed to the first network slice and the two second network slices for transmission. This process is repeated until the network quality parameter of the target application reaches the preset value. In an embodiment, if the network quality parameter is a delay, the preset value for the network quality parameter of the target application may be 1 millisecond. When the data transmission delay of the target application is less than 1 millisecond, it is determined that the network quality parameter of the target application reaches the preset value. If the network quality parameter is a rate, the preset value may be 10 megabytes/second. When the data transmission rate of the target application is greater than 10 megabytes/second, it is determined that the network quality parameter of the target application reaches the preset value. It can be understood that the preset value may be set according to an actual situation, and certainly, the network quality parameter in the embodiments of the present disclosure is not limited to delay, rate, and packet loss rate.

As an example, when the number of second network slices is determined according to the preset number of network slices, the number of second network slices may be determined according to the number of network slices preset by the user. For example, if the number of network slices preset by the user is three, three second network slices are connected to.

It can be understood that either or both of the two judgment conditions, i.e., the network quality parameter of the target application and the preset number of network slices, may be set. When both the two judgment conditions are set, the number of the second network slices can be determined when any of the conditions is satisfied. This can avoid the situation of connecting to too many second network slices. For example, when too many second network slices are connected to in order to achieve a good network quality parameter, or when a good network quality parameter is already achieved and the number of second network slices does not reach the number of network slices preset by the user, there is no need to connect to a new second network slice.

As an example, a current network quality parameter of the target application may further be displayed for an intuitive knowledge by the user of the data transmission acceleration effect after the data transmission method in the embodiments of the present disclosure is applied.

As an example, a current data transmission status of the target application may further be displayed. The data transmission status may indicate whether the data transmission method in the embodiments of the present disclosure is currently used by the target application. For example, if the data transmission method in the embodiments of the present disclosure is currently not used by the target application, a "normal mode" is displayed; and if the data transmission method in the embodiments of the present disclosure is currently not used by the target application, an "acceleration mode" is displayed.

The principles of the data transmission method in the embodiments of the present disclosure are described below by way of examples.

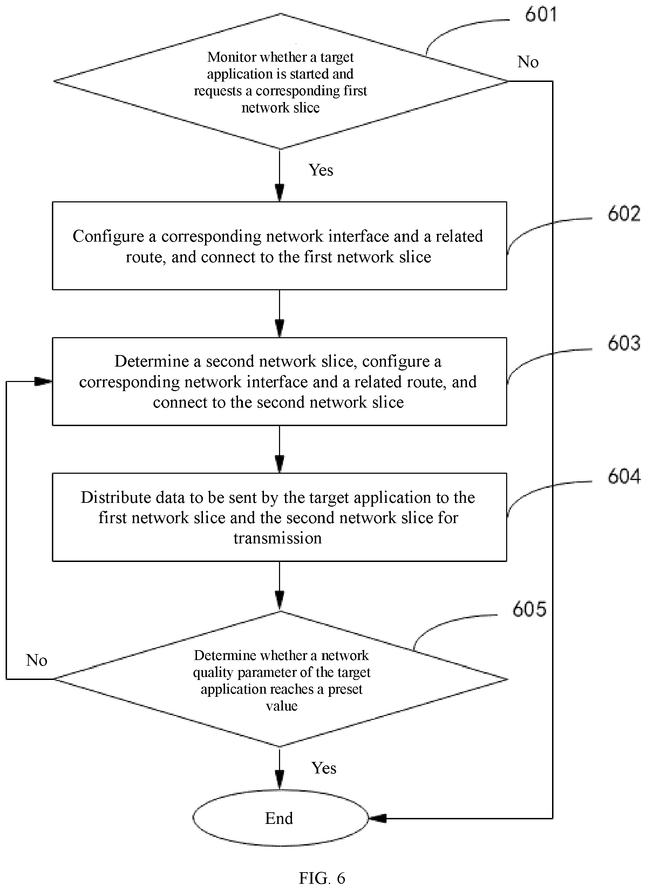

Referring to FIG. 6, an embodiment of the present disclosure provides a data transmission method, including, but not limited to, the following steps S601 to S605.

At S601, it is monitored whether a target application is started and requests a corresponding first network slice. If yes, S602 is performed; otherwise, the process ends.

At S602, a corresponding network interface and a related route are configured, and the first network slice is connected to.

At S603, a second network slice is determined, a corresponding network interface and a related route are configured, and the second network slice is connected to.

At S604, data to be sent by the target application is distributed to the first network slice and the second network slice for transmission.

At S605, it is determined whether a network quality parameter of the target application reaches a preset value. If yes, the process ends; otherwise, S603 is performed.

How to determine the second network slice in S603 has been described in detail in the above embodiments and will not be repeated here.

By simultaneously connecting to the first network slice and the second network slice which are different from each other, and during data transmission, distributing the data to the first network slice and the second network slice for transmission utilizing the first network slice and the second network slice at the same time, the problems of network congestion and network delay are alleviated, thereby improving the data transmission rate and achieving a network acceleration effect.

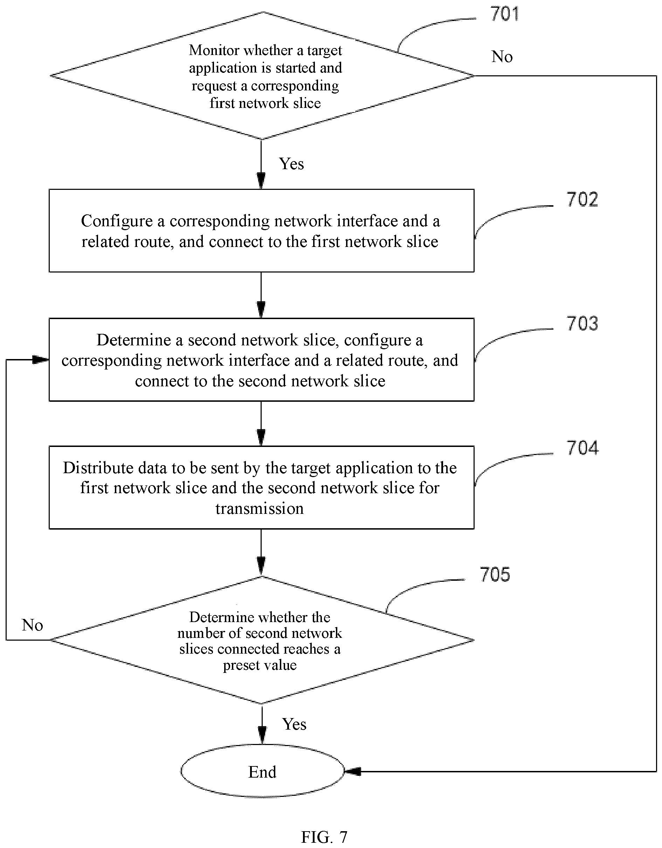

Referring to FIG. 7, an embodiment of the present disclosure provides a data transmission method, including, but not limited to, the following steps S701 to S705.

At S701, it is monitored whether a target application is started and requests a corresponding first network slice. If yes, S702 is performed; otherwise, the process ends.

At S702, a corresponding network interface and a related route are configured, and the first network slice is connected to.

At S703, a second network slice is determined, a corresponding network interface and a related route are configured, and the second network slice is connected to.

At S704, data to be sent by the target application is distributed to the first network slice and the second network slice for transmission.

At S705, it is determined whether the number of second network slices connected reaches a preset value. If yes, the process ends; otherwise, S703 is performed.

How to determine the second network slice in S703 has been described in detail in the above embodiments and will not be repeated here.

By simultaneously connecting to the first network slice and the second network slice which are different from each other, and during data transmission, distributing the data to the first network slice and the second network slice for transmission utilizing the first network slice and the second network slice at the same time, the problems of network congestion and network delay are alleviated, thereby improving the data transmission rate and achieving a network acceleration effect.

It should also be understood that the various implementations provided by the embodiments of the present disclosure may be arbitrarily combined to achieve different technical effects.

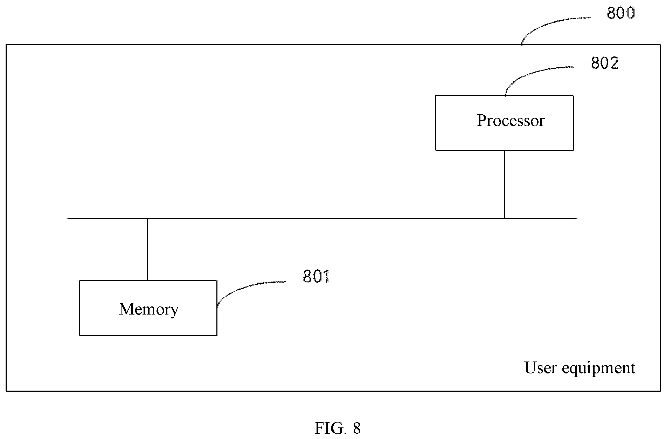

FIG. 8 shows a user equipment 800 according to an embodiment of the present disclosure. The user equipment 800 includes: a memory 801, a processor 802, and a computer program stored in the memory 801 and executable by the processor 802. The computer program, when executed by the processor, causes the processor to implement the data transmission method.

The processor 802 and the memory 801 may be connected by a bus or in other ways.

The memory 801, as a non-transitory computer-readable storage medium, may be configured for storing a non-transitory software program and non-transitory computer-executable program, for example, the data transmission method described in the embodiments of the present disclosure. The processor 802 executes the non-transitory software program and the instructions stored in the memory 801, to implement the data transmission method.

The memory 801 may include a program storage area and a data storage area. The program storage area may store an operating system, and an application required by at least one function. The storage data area may store executing the data transmission method. In addition, the memory 801 may include a high-speed random access memory, and may also include a non-transitory memory, e.g., at least one storage device storage 801 device, flash memory device, or other non-transitory solid-state storage device. In some implementations, the memory 801 may include memories located remotely from the processor 802, and the remote memories may be connected to the user equipment 800 via a network. Examples of the network include, but are not limited to, the Internet, an intranet, a local area network, a mobile communication network, and combinations thereof.

The non-transitory software program and instructions required to implement the data transmission method are stored in the memory 801 which, when executed by one or more processors 802, causes the one or more processors 802 to implement the data transmission method, for example, implement the method steps S201 to S203 in FIG. 2, the method steps S301 to S302 in FIG. 3, the method steps S401 to S402 in FIG. 4, the method steps S501 to S503 in FIG. 5, the method steps S601 to S605 in FIG. 6, and the method steps S701 to S705 in FIG. 7.

An embodiment of the present disclosure provides a computer-readable storage medium storing a computer-executable instruction which, when executed by a processor, causes the processor to implement the data transmission method.

In an embodiment, the computer-readable storage medium stores a computer-executable instruction which, when executed by one or more control processors, for example, by a processor 802 in the user equipment 800, causes the processor 802 to implement the data transmission method, for example, implement the method steps S201 to S203 in FIG. 2, the method steps S301 to S302 in FIG. 3, the method steps S401 to S402 in FIG. 4, the method steps S501 to S503 in FIG. 5, the method steps S601 to S605 in FIG. 6, and the method steps S701 to S705 in FIG. 7.

The embodiments of the present disclosure at least include the following beneficial effects: connecting to a first network slice corresponding to a target application; determining a second network slice from network slices other than the first network slice and connecting to the second network slice; and distributing data to be sent by the target application to the first network slice and the second network slice for transmission. By simultaneously connecting to the first network slice and the second network slice which are different from each other, and during data transmission, distributing the data to the first network slice and the second network slice for transmission utilizing the first network slice and the second network slice at the same time, the problems of network congestion and network delay are alleviated, thereby improving the data transmission rate and achieving a network acceleration effect.

The apparatus embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer readable instructions, data structures, program modules, or other data). The computer storage medium includes, but is not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a storage device or other magnetic storage device, or any other medium which can be used to store the desired information and which can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

Although some implementations of the present disclosure have been described above, the present disclosure is not limited thereto. Those having ordinary skills in the art can make various equivalent modifications or replacements without departing from the scope of the present disclosure. These equivalent modifications or replacements shall fall within the scope defined by the appended claims of the present disclosure.

## Claims

1. A data transmission method, comprising:
connecting to a first network slice corresponding to a target application;
determining a second network slice from network slices other than the first network slice, and connecting to the second network slice; and
distributing data to be sent by the target application to the first network slice and the second network slice for transmission.

2. The data transmission method of claim 1, wherein connecting to a first network slice corresponding to a target application comprises:
acquiring an operational status of the target application; and
connecting to the first network slice in response to the operational status of the target application being a started state and the corresponding first network slice being requested by the target application.

3. The data transmission method of claim 1, wherein determining a second network slice from network slices other than the first network slice comprises:
acquiring a preset application list; and
determining the second network slice from the network slices other than the first network slice in response to determining that the target application belongs to the application list.

4. The data transmission method of claim 1 or 3, wherein determining a second network slice from network slices other than the first network slice comprises:
selecting, from a public network slice pool currently established by a user equipment (UE), a network slice other than the first network slice as the second network slice according to a network quality parameter.

5. The data transmission method of claim 1 or 3, wherein determining a second network slice from network slices other than the first network slice comprises:
selecting, from LTE route selection policy (URSP) rule information, the second network slice other than the first network slice according to a first data network name (DNN) corresponding to the first network slice, wherein the second network slice is a network slice matching the first DNN.

6. The data transmission method of claim 5, wherein selecting, from LTE route selection policy (URSP) rule information, the second network slice other than the first network slice comprises:
selecting, from the URSP rule information, a network slice matching the first DNN other than the first network slice as the second network slice according to a connection priority.

7. The data transmission method of claim 1 or 3, wherein determining a second network slice from network slices other than the first network slice comprises:
acquiring, from an allowed network slice selection assistance information (ALLOWED_NSSAI) list provided by a network side, a network slice other than the first network slice as the second network slice.

8. The data transmission method of claim 1 or 3, wherein the target application carries a second DNN corresponding to the second network slice, and determining a second network slice from network slices other than the first network slice comprises:
determining the corresponding second network slice according to the second DNN.

9. The data transmission method of claim 1, wherein distributing data to be sent by the target application to the first network slice and the second network slice for transmission comprises:
acquiring a network quality parameter of the first network slice and a network quality parameter of the second network slice;
determining data carrying capacity of the first network slice and data carrying capacity of the second network slice according to the network quality parameter of the first network slice and the network quality parameter of the second network slice; and
distributing, according to the data carrying capacity of the first network slice and the data carrying capacity of the second network slice, the data to be sent by the target application to the first network slice and the second network slice for transmission.

10. The data transmission method of claim 1 or 9, wherein:
the data distributed to the second network slice comprises the data distributed to the first network slice.

11. The data transmission method of claim 1, wherein:
the first network slice and the second network slice respectively belong to networks on which different subscriber identity module (SIM) cards camp.

12. The data transmission method of claim 1, wherein:
the number of the second network slices is one or more, and the number of the second network slices is determined according to a network quality parameter of the target application and/or a preset number of network slices.

13. The data transmission method of claim 1, further comprising:
displaying a current network quality parameter and/or data transmission status of the target application.

14. A user equipment, comprising: at least one processor; and a memory communicably connected to the at least one processor, wherein the memory stores an instruction executable by the at least one processor which, when executed by the at least one processor, causes the at least one processor to perform the data transmission method of any one of claims 1 to 13.

15. A computer-readable storage medium, storing a computer-executable instruction which, when executed by a processor, causes the processor to perform the data transmission method of any one of claims 1 to 13.
